# EUROPEAN PATENT APPLICATION

(11) **EP 4 696 629 A1**
(43) Date of publication of application: **18.02.2026**
(21) Application number: 23933121.8
(22) Date of filing: 20.12.2023
(51) Int. Cl.: B65H 23/195, B29C 55/02, B29C 55/14, B65H 18/00, B65H 19/22, B65H 35/04, B65H 35/06

(54) **REWINDING DEVICE, FILM MOLDING DEVICE, AND REWINDING METHOD**

(30) Priority: 12.04.2023 JP 2023064694
(71) Applicant: The Japan Steel Works, Ltd., Tokyo 141-0032 (JP)
(72) Inventor: MORIGAMI, Yuta, Tokyo 141-0032 (JP); UCHIUMI, Shinichi, Tokyo 141-0032 (JP); AGO, Kazuhiro, Tokyo 141-0032 (JP)
(74) Representative: Simmons & Simmons LLP (Munich)
(86) International application number: PCT/JP2023/045823
(87) International publication number: WO 2024/214347

(57) **Abstract**

Provide are a rewinding device capable of facilitating rewinding of a film, a film molding device, and a rewinding method. A rewinding device according to one embodiment comprises a roll (110), a cutter (150), and a roll (120). The roll (110) is disposed below the cutter (150), and pushes a film (FL) downward to cause the film (FL) to approach the roll (120). When the film (FL) is broken, the cutter (150) cuts the film (FL) between the roll (110) and the roll (120), and the cut film (FL) is wound around a roll (510) of a scrap winder (500) disposed below the roll (110).

## Description

### Technical Field

The present disclosure relates to a rewinding apparatus, a film forming apparatus, and a rewinding method.

### Background Art

Patent Literature 1 discloses a longitudinal stretching apparatus and a lateral stretching apparatus. A film is stretched in a longitudinal direction by the longitudinal stretching apparatus and then stretched in a lateral direction by the lateral stretching apparatus.

### Citation List

### Patent Literature

[Patent Literature 1] Japanese Unexamined Patent Application Publication No. H09-150454

### Summary of Invention

### Technical Problem

If the film is broken in the lateral stretching apparatus, the film needs to be manually rewound onto the paper tube of the scrap winder. This requires time for an operator to rush to the machine and rewind the film. If the film remains in the lateral stretching apparatus in the meantime, it will require time and effort to clean up.

Other issues and novel features will become apparent from the description herein and the accompanying drawings.

### Solution to Problem

According to an embodiment, the rewinding apparatus including:
a first roll extending in a first direction; a cutter extending in the first direction and configured to cut a film; and a second roll extending in the first direction, wherein the first roll is disposed on one side of the cutter in a second direction orthogonal to the first direction, the second roll being disposed on other side of the cutter in the second direction, the first roll, the cutter, and the second roll are disposed so as to discharge the film supplied from the one side of the first roll in the second direction, through one side of the first roll in a third direction orthogonal to the first and second directions, the one side of the cutter in the third direction, and the other side of the second roll in the third direction, to the other side of the second roll in the second direction, and the first roll brings the film closer to the second roll by pushing the film toward the one side in the third direction, and when the film breaks on the other side of the second roll in the second direction, the cutter cuts the film between the first roll and the second roll,
and a cut film is wound on a winder roll of a scrap winder disposed on the one side of the first roll in the third direction.

According to an embodiment, a film forming apparatus including: the rewinding apparatus described above; a first stretching apparatus positioned on the one side of the rewinding apparatus in the second direction; and a second stretching apparatus positioned on the other side of the rewinding apparatus in the second direction; wherein the film supplied from the first stretching apparatus is supplied to the second stretching apparatus through the rewinding apparatus.

The rewinding method according to an embodiment is a method using the rewinding apparatus, the rewinding apparatus including:
a first roll extending in a first direction, the cutter extending in the first direction and configured to cut the film, and the second roll extending in the first direction, the first roll being disposed on the one side of the cutter in the second direction orthogonal to the first direction, the second roll being disposed on the other side of the cutter in the second direction, and the rewinding method including: a step of detecting a breakage of the film discharged from the rewinding apparatus by a detection unit; a step of discharging the film supplied from the one side of the first roll in the second direction to the other side of the second roll in the second direction through the one side of the first roll in a third direction orthogonal to the first and second directions, the one side of the cutter in the third direction, and the other side of the second roll in the third direction; a step of bringing the film closer to the second roll by pushing the film toward the one side in the third direction by the first roll; a step of, by the cutter, cutting the film between the first roll and the second roll when the film breaks on the other side of the second roll in the second direction; and a step of rewinding the film onto the winder roll of a scrap winder disposed on the one side of the first roll in the third direction, wherein in the cutting step, the cut film is wound on the winder roll.

### Advantageous Effects of Invention

According to the above-described embodiments, it is possible to provide a rewinding apparatus, a film forming apparatus, and a rewinding method configured to facilitate the rewinding of a film.

### Brief Description of Drawings

Fig. 1 is a schematic diagram illustrating a film forming apparatus according to a first embodiment;
Fig. 2 is a schematic diagram illustrating a configuration in which a scrap winder is combined with an automatic rewinding apparatus according to a first embodiment;
Fig. 3 is a schematic diagram illustrating a configuration in which an automatic rewinding apparatus and a scrap winder are separated according to a first embodiment;
Fig. 4 is a schematic diagram illustrating a configuration of an automatic rewinding apparatus according to a first embodiment;
Fig. 5 is a schematic diagram illustrating a configuration in which a film is passed through the automatic rewinding apparatus according to a first embodiment;
Fig. 6 is a schematic diagram illustrating a configuration during molding with a film set in the automatic rewinding apparatus according to a first embodiment;
Fig. 7 is a schematic diagram illustrating a configuration in which a breakage of a film is detected in the automatic rewinding apparatus according to a first embodiment;
Fig. 8 is a schematic diagram illustrating a temporary winding configuration of a scrap winder in an automatic rewinding apparatus according to a first embodiment;
Fig. 9 is a schematic diagram illustrating a detection unit configured to detect a breakage of a film in an automatic rewinding apparatus according to a first embodiment; and
Fig. 10 is a flowchart illustrating a film rewinding method using an automatic rewinding apparatus according to a first embodiment.

### Description of Embodiments

For clarification of explanation, the following descriptions and drawings are omitted and simplified as appropriate. In each of the drawings, the same reference numerals are assigned to the same elements, and duplicate explanations are omitted as necessary.

### (First Embodiment)

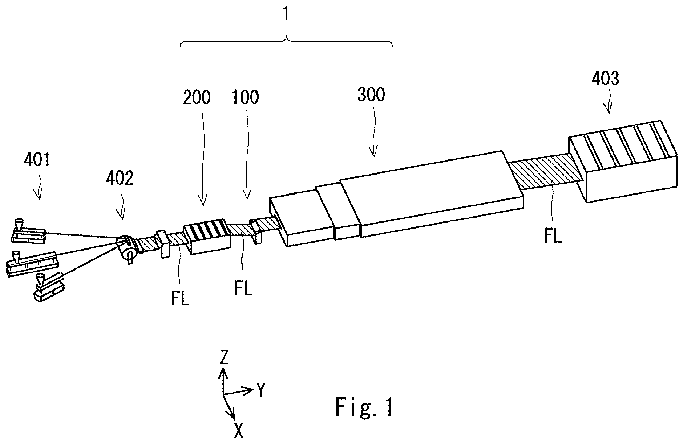

An automatic rewinding apparatus and a film forming apparatus according to a first embodiment are described below. Fig. 1 is a schematic diagram illustrating the film forming apparatus according to the first embodiment. As shown in Fig. 1, a film forming apparatus 1 includes an automatic rewinding apparatus 100, a longitudinal stretching apparatus 200, and a lateral stretching apparatus 300. The automatic rewinding apparatus 100 being disposed between the longitudinal stretching apparatus 200 and the lateral stretching apparatus 300. Therefore, in the film forming apparatus 1, the longitudinal stretching apparatus 200, the automatic rewinding apparatus 100, and the lateral stretching apparatus 300 are disposed in a line in this order.

The film forming apparatus 1 stretches a film FL longitudinally by the longitudinal stretching apparatus 200 and stretches the film FL laterally by the lateral stretching apparatus 300. In the figure, the Y-axis direction in which the longitudinal stretching apparatus 200, the automatic rewinding apparatus 100, and the transverse stretching apparatus 300 are arranged corresponds to the longitudinal direction of the film FL, and the X-axis direction orthogonal to the longitudinal direction corresponds to the lateral direction of the film FL.
The film FL supplied to the film forming apparatus 1 may be supplied by flatly stretching the material extruded from the extruding machine 401 by a cast roll 402. The film FL stretched by the film forming apparatus 1 may be wound up by a take-up winding machine 403.

As described above, the film forming apparatus 1 includes the automatic rewinding apparatus 100, a longitudinal stretching apparatus 200 positioned on the -Y-axis direction side of the automatic rewinding apparatus 100, and a lateral stretching apparatus 300 positioned on the +Y-axis direction side of the automatic rewinding apparatus 100. The film FL supplied from the longitudinal stretching apparatus 200 is supplied to the lateral stretching apparatus 300 through the automatic rewinding apparatus 100. Thus, the film forming apparatus 1 forms the stretched film FL.

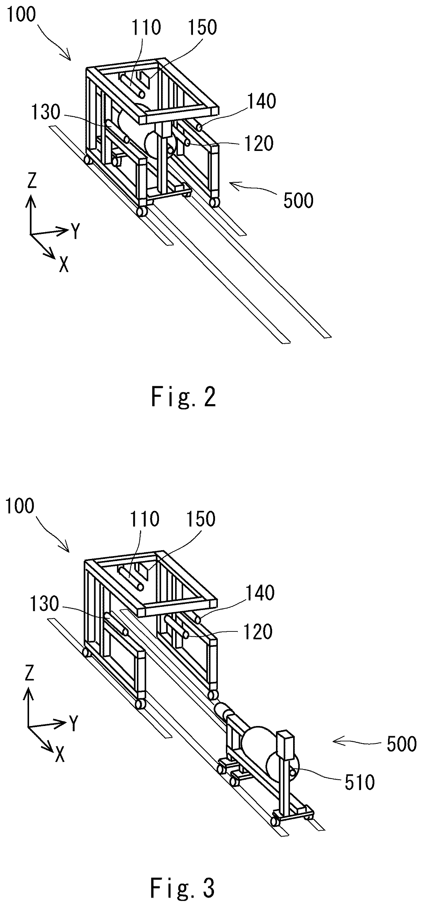

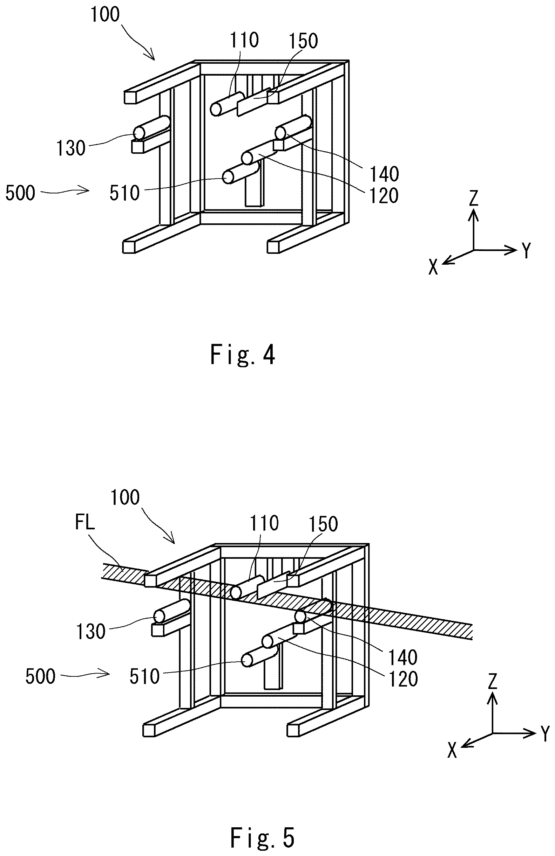

Next, the automatic rewinding apparatus 100 will be described as follows. Fig. 2 is a schematic diagram illustrating a configuration in which the automatic rewinding apparatus 100 according to the first embodiment is combined with the scrap winder 500. Fig. 3 is a schematic diagram illustrating a configuration in which the automatic rewinding apparatus 100 according to the first embodiment is separated from the scrap winder 500. Fig. 4 is a schematic diagram illustrating a configuration of the automatic rewinding apparatus 100 according to the first embodiment. In Fig. 4, only the roll 510 of the scrap winder 500 is shown. The roll 510 of the scrap winder 500 may also be referred to as a winder roll.

As shown in Figs. 2 to 4, the automatic rewinding apparatus 100 may be used in combination with the scrap winder 500. The automatic rewinding apparatus 100 can automatically rewind the film FL onto the roll 510 of the scrap winder 500 in case the film FL is broken. The automatic rewinding apparatus 100 may be simply referred to as the rewinding apparatus. The automatic rewinding apparatus 100 includes a roll 110, a roll 120, a roll 130, a roll 140, and a cutter 150.

The roll 110 to 140 is cylindrical, for example. Each of the rolls 110 to 140 has a central axis. Each of the rolls 110 to 140 rotates around the central axis as a rotation axis.

Here, for convenience in explaining the automatic rewinding apparatus 100, the XYZ orthogonal coordinate axis system is introduced. The direction in which each central axis of the roll 110 to 140 extends is the X-axis direction, and two directions orthogonal to the X-axis direction are the Y-axis direction and the +Z-axis direction. For example, the + Z-axis direction is upward, and the -Z-axis direction is downward. The X-axis direction, the Y-axis direction, and the Z-axis direction may be referred to as the first direction, the second direction, and the third direction, respectively. At least one of the -X-axis direction side, the -Y-axis direction side, and the -Z-axis direction side may be referred to as one side, and at least one of the + X-axis direction side, the + Y-axis direction side, and the +Z-axis direction side may be referred to as the other side. Conversely, at least one of the -X-axis direction side, the -Y-axis direction side, and the -Z-axis direction side may be referred to as the other side, and at least one of the + X-axis direction side, the +Y-axis direction side, and the +Z-axis direction side may be referred to as one side. The upward and downward directions are for convenience of explanation, and do not limit the direction in which the automatic rewinding apparatus 100 is actually disposed.

The rolls 110 to 140 are extended in the X-axis direction. Each of the rolls 110 to 140 has a central axis extending in the X-axis direction and rotating around the central axis. The roll 110 to 140 may not necessarily rotate around the center axis as long as the film FL can be smoothly moved.

The roll 130 being disposed toward the -Y-axis direction side of the roll 110, the roll 120, the roll 140, the cutter 150 and the roll 510. The roll 130 being disposed toward the +Z-axis direction side of the roll 510. The roll 130 may be disposed toward the +Z-axis direction side of the roll 120.

The roll 110 being disposed toward the +Y-axis direction side of the roll 130. The roll 110 being disposed toward the -Y-axis direction side of the roll 120, the roll 140 and the cutter 150. The roll 110 may be disposed toward the -Y-axis direction side of the roll 510. The roll 110 being disposed movably in the Z -axis direction. When the film FL is passed through the apparatus, the roll 110 may be disposed toward the +Z-axis direction side than the rolls 130 and 140. When the film FL is formed, the roll 110 may be disposed toward the -Z-axis direction side than the rolls 130 and 140. When the film FL is formed, the roll 110 may be disposed toward the -Z-axis direction side than the rolls 120. When the film FL is passed through and formed, the roll 110 may be disposed toward the +Z-axis direction side than the rolls 510.

The roll 120 being disposed toward the +Y-axis direction side than the rolls 110, 130 and the cutter 150. The roll 120 being disposed toward the -Y-axis direction side than the roll 140. The roll 120 may be movable in at least one of the Y-axis direction and the Z-axis direction. For example, when the scrap winder 500 is moved from the automatic rewinding apparatus 100, the roll 120 may be separated from the roll 510 so as not to obstruct the movement. The roll 120 may be disposed toward the -Z-axis direction side than the rolls 130 and 140. The roll 120 may be disposed toward the +Z-axis direction side of the roll 510.

The roll 140 being disposed toward the +Y-axis direction side of the roll 110, the roll 120, the roll 130, the cutter 150 and the roll 510. The roll 140 being disposed toward the +Z-axis direction side of the roll 510. The roll 140 may be disposed toward the +Z-axis direction side of the roll 120.

The roll 510 being disposed toward the +Y-axis direction side of the roll 130. The roll 510 may be disposed toward the + Y-axis direction side of the roll 110. The roll 510 being disposed toward the - Y-axis direction side of the roll 140. The roll 510 may be disposed toward the -Y-axis direction side of the roll 120. The roll 510 being disposed toward the -Z -axis direction side than the rolls 130 and 140.

The cutter 150 extends in the X-axis direction. The cutter 150 being disposed toward the +Y-axis direction side than the rolls 130 and 110. The cutter 150 being disposed toward the -Y-axis direction side than the rolls 120 and 140. The cutter 150 may be disposed toward the +Y-axis direction side than the rolls 510. The cutter 150 being disposed movably in the Z-axis direction. The -Z-axis direction side of the cutter 150 is a blade. The cutter 150 cuts the film. The cutter 150 may be, for example, a guillotine cutter.

Next, a configuration in which the film FL is passed through the automatic rewinding apparatus 100 will be described. Fig. 5 is a schematic diagram illustrating a configuration in which the film FL is passed through the automatic rewinding apparatus 100 according to the first embodiment. As shown in Fig. 5, the roll 110, the roll 120, the roll 130, the roll 140, and the cutter 150 are disposed so as to discharge the film FL supplied from the -Y-axis direction side of the roll 130 (i. e., from the -Y-axis direction side of the roll 110) to the +Y-axis direction side of the roll 140 through the +Z-axis direction side of the roll 130, the -Z-axis direction side of the roll 110, the -Z-axis direction side of the cutter 150, the +Z-axis direction side of the roll 120, and the +Z-axis direction side of the roll 140 (in the +Y-axis direction side than the roll 120).

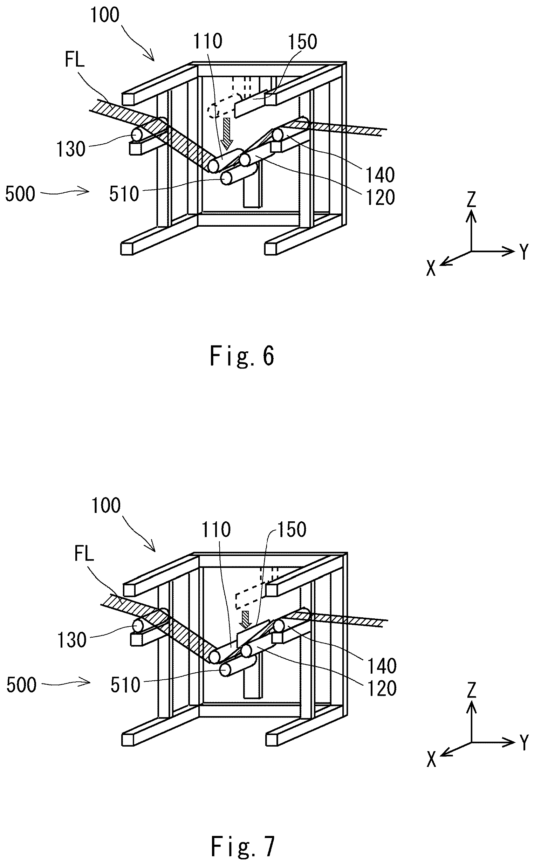

Next, a configuration in the case of forming in which the film FL is set in the automatic rewinding apparatus 100 will be described. Fig. 6 is a schematic diagram illustrating a configuration in the case of forming in which the film FL is set in the automatic rewinding apparatus 100 according to the first embodiment. As shown in Fig. 6, during forming, the roll 110 is lowered in the -Z axis direction, is arranged on the -Z axis direction side than the rolls 130 and 140, and pushes the film FL in the -Z axis direction. When the roll 110 may generate a tension in the film FL by pushing the film FL in the -Z axis direction in this manner. The roll 110 brings the film FL closer to the roll 120 by pushing the film FL in the -Z axis direction. For example, roll 110 may sandwich the film FL between roll 120. Roll 110 may sandwich the film FL between roll 510 of scrap winder 500. In this state, automatic rewinding apparatus 100 discharges the film FL supplied from longitudinal stretching apparatus 200 to lateral stretching apparatus 300. In this manner, the film forming apparatus 1 sets film FL and forms film FL.

Next, a configuration when the film FL is broken will be described. Fig. 7 is a schematic diagram illustrating a configuration when the breakage of the film FL is detected in the automatic rewinding apparatus 100 according to the first embodiment. As shown in Fig. 7, when the film FL is broken in the +Y axis direction than the roll 140 (that is, in the case of breakage on the +Y axis side of the roll 120), specifically, when the film FL is broken in the lateral stretching apparatus 300, the cutter 150 cuts the film FL between the roll 110 and the roll 120. For example, the cutter 150 drops in the -Z axis direction and cuts the film FL. The roll 120 may hold the film FL when the cutter 150 cuts the film FL. The cut film FL is wound around the roll 510 of the scrap winder 500 disposed in the -Z axis direction of the roll 110. For example, the cut film FL is wound on the roll 510 of the scrap winder 500. That is, since the tension is generated in the film FL by the roll 110, when the film FL is cut between the roll 110 and the roll 120, the cut film FL is wound around the roll 510 by the action of the tension.

The cut film FL may be wound around the roll 510 by the action of the tension, or it may be wound around the roll 510 by a tape for attaching prepared in advance on the roll 510 of the scrap winder 500. The cut film FL may be subjected to static electricity, and it may be wound around the roll 510 by the static electricity.

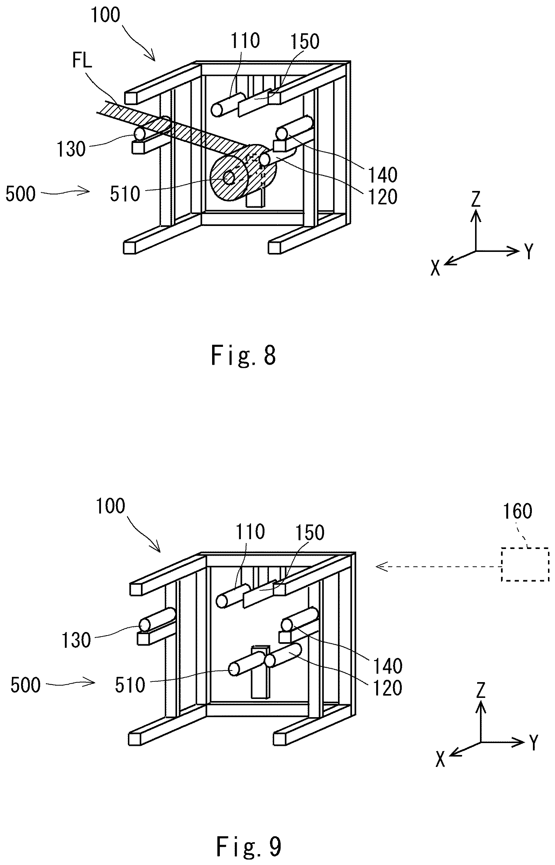

Next, the temporary winding of a scrap winder 500 will be described. Fig. 8 is a schematic diagram illustrating a configuration of the temporary winding of the scrap winder 500 in the automatic rewinding apparatus 100 according to the first embodiment. As shown in Fig. 8, the roll 510 of the scrap winder 500 winds the film FL cut by the cutter 150 and continues to wind the film FL supplied from the longitudinal stretching apparatus 200. In this case, the roll 110 and the cutter 150 move in the +Z -axis direction. The process of winding the film FL supplied from the longitudinal stretching apparatus 200 onto the roll 510 of the scrap winder 500 until the film FL broken in the lateral stretching apparatus 300 is removed from the lateral stretching apparatus 300 and the film FL is newly supplied to the lateral stretching apparatus 300, is called temporary winding.

When the broken film FL is removed from the lateral stretching apparatus 300 and the film FL is newly supplied to the lateral stretching apparatus 300, the scrap winder 500 including the roll 510 wound with the temporarily wound film FL will be removed from the automatic rewinding apparatus 100, as shown in Fig. 3. In other words, the automatic rewinding apparatus 100 can be removed from the scrap winder 500 including the roll 510 wound with the film FL. Then, the film FL is newly passed through the automatic rewinding apparatus 100 as shown in Fig. 5.

Fig. 9 is a schematic diagram illustrating the detection unit 160 configured to detect a breakage of the film FL in the automatic rewinding apparatus 100 according to the first embodiment. As shown in Fig. 9, the automatic rewinding apparatus 100 may further include a detection unit 160 configured to detect the breakage of the film FL. The detection unit 160 may be installed on the side of the roll 140 in the +Y-axis direction side, specifically, on the lateral stretching apparatus 300.

The detection unit 160 may detect a change in the tension occurred in the film FL. For example, in order to stretch the film FL in the X-axis direction, the lateral stretching apparatus 300 has clips that hold both ends of the film FL in the X-axis direction. The detection unit 160 can detect the breakage of the film FL by monitoring the tension applied to the clips. For example, when the film FL is broken, the tension decreases, and the detection unit 160 can detect the breakage of the film FL.

In addition, the detection unit 160 may detect a change in reflected light or transmitted light of light applied to the film FL. For example, the lateral stretching apparatus 300 may have an optical illumination applied for the film FL, and a measuring instrument that detects reflected light reflected by the film FL or transmitted light transmitted through the film FL. The detection unit 160 can detect the breakage of the film FL by monitoring the amount of reflected light or transmitted light measured by the measuring instrument.

Further, the detection unit 160 may detect an image of the film FL. For example, the lateral stretching apparatus 300 has a camera for photographing the film FL. The detection unit 160 can detect the breakage of the film FL by monitoring the change in the shape of the film FL in the image.

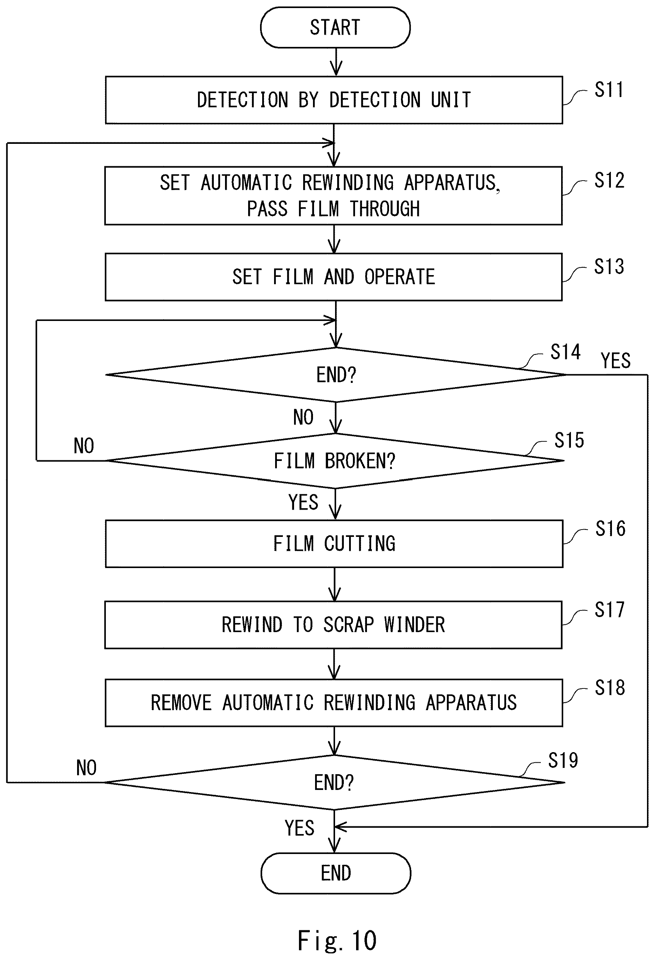

Next, as an operation of the automatic rewinding apparatus 100, a method of rewinding the film FL using the automatic rewinding apparatus 100 will be described. Fig. 10 is a flowchart illustrating a method of rewinding the film FL using the automatic rewinding apparatus 100 according to the first embodiment.

As shown in step S11 of Fig. 10 and in Fig. 9, the detection unit 160 starts detecting. Specifically, the detection unit 160 detects the breakage of the film FL discharged from the automatic rewinding apparatus 100. Note that step S11 may be performed before step S13, after step S12, or simultaneously with step S12.

Next, as shown in step S12 of Fig. 10 and in Fig. 5, the film FL is passed through the automatic rewinding apparatus 100. Specifically, the film FL supplied from the -Y-axis direction side of the roll 130 is discharged toward the +Y-axis direction side of the roll 140 through the +Z-axis direction side of the roll 130, the -Z-axis direction side of the roll 110, the -Z-axis direction side of the cutter 150, the +Z-axis direction side of the roll 120, and the +Z-axis direction side of the roll 140. Thus, the film FL supplied from the longitudinal stretching apparatus 200 is supplied to the lateral stretching apparatus 300 through the automatic rewinding apparatus 100.

Next, as shown in step S13 of Fig. 10 and in Fig. 6, the film FL is set in the automatic rewinding apparatus 100 forming of the film FL is started. Specifically, the roll 110 being disposed toward the -Z-axis direction side of the roll 130 and the roll 140, and the roll 110 pushes the film FL toward the -Z-axis direction side, thereby bringing the film FL closer to the roll 120. Tension may be generated in the film FL by pushing the film FL toward the -Z-axis direction side. In this state, forming of the film FL is started.

Next, as shown in step S14 of Fig. 10, it is determined whether or not to end the forming of the film FL. If the forming of the film FL is to be ended (YES in step S 14), the forming of the film FL ends. On the other hand, when the forming of the film FL is to be continued (NO in step S14), it is determined whether the film FL is broken as shown in step S15 of Fig. 10.

When the detection unit 160 has not detected the breakage of the film FL (NO in step S15), steps S14 and S15 are repeated. On the other hand, when the detection unit 160 has detected the breakage of the film FL (YES in step S 15), the cutter 150 cuts the film FL between the roll 110 and the roll 120 as shown in step S16 of Fig. 10 and in Fig. 7. The cut film FL is wound around the roll 510 of the scrap winder 500. For example, the cut film FL is wound on the roll 510 of the scrap winder 500 due to the tension, tape for attaching, static electricity, and the like.

Next, as shown in step S17 of Fig. 10 and in Fig. 8, the film FL is rewound and temporarily wound around the roll 510 of the scrap winder 500 disposed toward the -Z-axis direction side of the roll 110.

Next, as shown in step S18 of Fig. 10 and in Fig. 3, the automatic rewinding apparatus 100 is removed from the scrap winder 500 including the roll 510 on which the film FL is wound. For example, when the film FL is broken in the lateral stretching apparatus 300 is removed and the film FL is newly formed, the scrap winder 500 can be removed from the automatic rewinding apparatus 100.

Next, as shown in step S19 of Fig. 10, it is determined whether or not to end the film forming. If the film FL forming is to be ended (YES in step S19), the process ends. On the other hand, if the film FL forming is to be continued (NO in step S19), the automatic rewinding apparatus 100 is passed through the film FL as shown in step S12 of Fig. 10. Then, the forming of the film FL is continued.

Next, the effect of this embodiment will be described. When the automatic rewinding apparatus 100 of this embodiment detects the breakage of the film FL in the lateral stretching apparatus 300, it will cut the film FL and automatically winds cut film FL around the roll 510 of the scrap winder 500. Therefore, when the film FL is broken, the film FL can be immediately rewound onto the roll 510 of the scrap winder 500, and the amount of the film FL remaining in the lateral stretching apparatus 300 can be reduced.

In addition, the automatic rewinding apparatus 100 can incorporate the scrap winder 500 and can also remove the scrap winder 500. Therefore, when the film FL is broken, it is possible to instantaneously wind the film FL cut by the cutter 150 around the scrap winder 500 and also is possible to remove the temporarily wound scrap winder 500.

The detection unit 160 can use a detection method according to the characteristics of the film FL, such as changes in the tension generated in the film FL, changes in reflected light or transmitted light of light applied to the film FL, and an image of the film Fl or the like, and can detect the breakage of the film FL with high accuracy.

Further, the present disclosure is not limited to the above-described embodiments and may be appropriately modified without departing from the spirit of the present disclosure. For example, in the above description, the +Z-axis direction is upward, and the -Z-axis direction is downward, but an upside-down configuration may be used. For example, the rolls 110, 120, 130, and 140 may be disposed so as to discharge the film FL supplied from the -Y-axis direction side of the roll 130 to the +Y-axis direction side of the roll 140 through the upper side of the roll 130, the lower side of the roll 110, the upper side of the roll 120, and the upper side of the roll 140, or to discharge the film FL to the +Y-axis direction side of the roll 140 through the lower side of the roll 130, the upper side of the roll 110, the lower side of the roll 120, and the lower side of the roll 140. Further, in this case, the roll 110 may be disposed above the roll 130 and the roll 140, and the tension may be generated in the film FL by pushing the film FL upward. The cutter 150 may be moved upward to cut the film FL, or downward to cut the film FL.

This application is based upon and claims the benefit of priority from Japanese Patent Application No. 2023-064694, filed on April 12, 2023, the disclosure of which is incorporated herein in its entirety by reference.

### Reference Signs List

1 FILM FORMING APPARATUS
100 AUTOMATIC REWINDING APPARATUS
110 ROLL
120 ROLL
130 ROLL
140 ROLL
150 CUTTER
160 DETECTION UNIT
200 LONGITUDINAL STRETCHING APPARATUS
300 LATERAL STRETCHING APPARATUS
401 EXTRUDING MACHINE
402 CAST ROLL
403 TAKE-UP WINDING MACHINE
500 SCRAP WINDER
510 ROLL
FL FILM

## Claims

1. A rewinding apparatus comprising:
a first roll extending in a first direction;
a cutter extending in the first direction and configured to cut a film;
and a second roll extending in the first direction, wherein
the first roll is disposed on one side of the cutter in a second direction orthogonal to the first direction,
the second roll being disposed on the other side of the cutter in the second direction,
the first roll, the cutter, and the second roll are disposed so as to discharge the film supplied from the one side of the first roll in the second direction, through one side of the first roll in a third direction orthogonal to the first and second directions, the one side of the cutter in the third direction, and the other side of the second roll in the third direction, to the other side of the second roll in the second direction, and
the first roll brings the film closer to the second roll by pushing the film toward the one side in the third direction,
and when the film breaks on the other side of the second roll in the second direction,
the cutter cuts the film between the first roll and the second roll, and
a cut film is wound on a winder roll of a scrap winder disposed on the one side of the first roll in the third direction.

2. The rewinding apparatus according to claim 1,
further comprising a detection unit configured to detect a breakage of the film,
wherein the detection unit detects the breakage of the film based on at least one of a change in a tension occurred in the film, a change in reflected light or transmitted light of light applied to the film, and an image of the film.

3. The rewinding apparatus according to claim 1,
wherein the rewinding apparatus is removable from the scrap winder including the winder roll on which the film is wound.

4. A film forming apparatus comprising:
a rewinding apparatus according to any one of claims 1 to 3;
a first stretching apparatus positioned on the one side of the rewinding apparatus in the second direction; and
a second stretching apparatus positioned on the other side of the rewinding apparatus in the second direction; wherein
the film supplied from the first stretching apparatus is supplied to the second stretching apparatus through the rewinding apparatus.

5. A rewinding method using a rewinding apparatus, the rewinding apparatus comprising:
a first roll extending in a first direction;
a cutter extending in the first direction and configured to cut a film; and
a second roll extending in the first direction,
the first roll being disposed on one side of the cutter in a second direction orthogonal to the first direction,
the second roll being disposed on one side of the cutter in the second direction, and
the rewinding method comprising:
a step of detecting a breakage of the film discharged from the rewinding apparatus by a detection unit;
a step of discharging the film supplied from the one side of the first roll in the second direction to the other side of the second roll in the second direction through the one side of the first roll in a third direction orthogonal to the first and second directions, the one side of the cutter in the third direction, and the other side of the second roll in the third direction;
a step of bringing the film closer to the second roll by pushing the film toward the one side in the third direction by the first roll;
a step of, by the cutter, cutting the film between the first roll and the second roll when the film breaks on the other side of the second roll in the second direction; and
a step of rewinding the film onto a winder roll of a scrap winder disposed on the one side of the first roll in the third direction,
wherein in the cutting step, the cut film is wound on the winder roll.

6. The rewinding method according to claim 5,
further comprising a step of removing the rewinding apparatus from the scrap winder including the winder roll on which the film is wound.
